# EUROPEAN PATENT APPLICATION

(11) **EP 4 844 873 A1**
(43) Date of publication of application: **25.11.2026**
(21) Application number: 26179346.7
(22) Date of filing: 18.05.2026
(51) Int. Cl.: H01M 10/0567

(54) **ELECTROLYTE FOR LITHIUM SECONDARY BATTERY AND LITHIUM SECONDARY BATTERY INCLUDING THE SAME**

(30) Priority: 19.05.2025 KR 20250064817
(71) Applicant: SK On Co., Ltd., Seoul 03161 (KR)
(72) Inventor: PARK, Min Woo, Daejeon 34124 (KR); KIM, Jeong Yun, Daejeon 34124 (KR); CHO, In Haeng, Daejeon 34124 (KR)
(74) Representative: Prüfer & Partner mbB Patentanwälte · Rechtsanwälte

(57) **Abstract**

An electrolyte for a lithium secondary battery and a lithium secondary battery are provided. The electrolyte for a lithium secondary battery includes a lithium salt; and a sulfur-containing compound, wherein the sulfur-containing compound includes a first compound represented by Formula 1 below and a second compound represented by Formula 2 below, and the combined content of the first and second compounds may be 0.02 wt% to 15 wt%, based on the total weight of the electrolyte. The lithium secondary battery may include the electrolyte for a lithium secondary battery. According to the present disclosure, improved output characteristics and stability may be achieved.

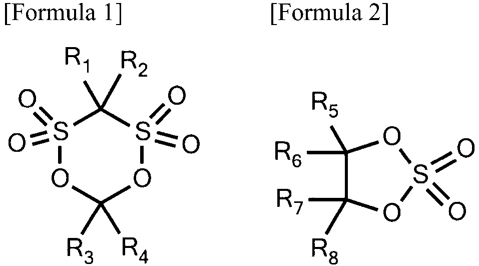

## Description

### [BACKGROUND OF THE INVENTION]

### 1. Field of the Invention

The disclosure of the present application relates to an electrolyte for a lithium secondary battery and a lithium secondary battery including the electrolyte.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have been developed and applied as power sources for eco-friendly vehicles, such as electric vehicles.

Examples of secondary batteries may include a lithium secondary battery, a nickelcadmium battery, a nickel-hydrogen battery and the like. Among these, the lithium secondary battery has been actively developed and applied due to its high operating voltage, high energy density per unit weight, and advantages in charging speed and weight reduction.

Lithium-transition metal composite oxides containing lithium or lithium iron phosphate (LFP) active materials are used as a cathode material for a lithium secondary battery.

In addition, research and development on various types of additives are being conducted to improve the performance of the lithium secondary batteries.

### [SUMMARY OF THE INVENTION]

An object of the present disclosure is to provide an electrolyte for a lithium secondary battery having improved output characteristics and stability.

Another object of the present disclosure is to provide a lithium secondary battery having improved output characteristics and stability.

An electrolyte for a lithium secondary battery according to embodiments of the present disclosure includes: a lithium salt; and a sulfur-containing compound, wherein the sulfur-containing compound may include a first compound represented by Formula 1 below and a second compound represented by Formula 2 below, and the combined content of the first and second compounds may be 0.02% by weight to 15% by weight, based on the total weight of the electrolyte:

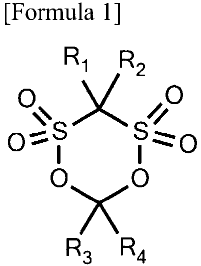

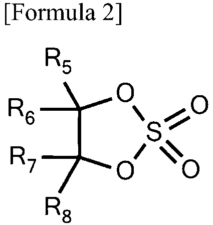

In Formula 1, R₁ to R₄ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine.

In Formula 2, R₅ to R₈ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine.

In an embodiment, a combined content of the first and second compounds may be 0.02% by weight to 10% by weight, based on the total weight of the electrolyte.

In an embodiment, a weight ratio of the second compound to the first compound may be 0.05 to 20.

In an embodiment, the weight ratio of the second compound to the first compound may be 1 to 10.

In an embodiment, a content of the first compound and a content of the second compound may each independently be 0.005% by weight to 10% by weight, based on the total weight of the electrolyte.

In an embodiment, the content of the first compound and the content of the second compound may each independently be 0.01% by weight to 5% by weight, based on the total weight of the electrolyte.

In an embodiment, the electrolyte for a lithium secondary battery may not include 1,3-propanesultone (PRS), 1,3-propenesultone (PS), and ethylene sulfite (ES) as the sulfur-containing compound.

In an embodiment, the electrolyte for a lithium secondary battery may further include an organic solvent, wherein the organic solvent may include at least one of a linear carbonate compound and a cyclic carbonate compound.

In an embodiment, the organic solvent may include at least one of ethyl methyl carbonate (EMC) and ethylene carbonate (EC).

In an embodiment, the electrolyte for a lithium secondary battery may further include an auxiliary additive including at least one of fluoroethylene carbonate (FEC) and vinylene carbonate (VC).

A lithium secondary battery according to embodiments of the present disclosure includes: a cathode; an anode disposed opposite the cathode; and the above-described electrolyte for a lithium secondary battery.

In an embodiment, the lithium secondary battery may include an electrode assembly including the cathode, the anode, and a separator interposed between the cathode and the anode, wherein at least a portion of the electrolyte may be impregnated into the electrode assembly.

In an embodiment, the cathode may include a cathode current collector and a cathode active material layer disposed on at least one surface of the cathode current collector and including a cathode active material, wherein the cathode active material may include a lithium iron phosphate compound.

In an embodiment, the lithium iron phosphate compound may include LiFePO₄, and the LiFePO₄ may be doped with at least one metal selected from the group consisting of Mg, Ca, Sr, Y, Zr, Ba, Ni, Co, Ti, V, and Mn.

In an embodiment, the anode may include an anode current collector and an anode active material layer disposed on at least one surface of the anode current collector and including an anode active material, wherein the anode active material may include at least one selected from the group consisting of a carbon-based active material, a silicon-based active material, and silicon carbide (SiC).

The electrolyte for a lithium secondary battery according to the embodiments of the present disclosure may achieve improved output characteristics and stability.

The lithium secondary battery according to the embodiments of the present disclosure may achieve improved output characteristics and stability.

The electrolyte for a lithium secondary battery and the lithium secondary battery including the same according to the present disclosure may be widely applied in green technology fields including electric vehicles, battery charging stations, and renewable energy systems using batteries, such as photovoltaics and wind power generation. The electrolyte for a lithium secondary battery and the lithium secondary battery including the same according to the present disclosure may be used in eco-friendly electric vehicles and hybrid vehicles to suppress air pollution and greenhouse gas emissions, thereby contributing to mitigating climate change.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a schematic plan view of a lithium secondary battery according to exemplary embodiments; and
FIG. 2 is a schematic cross-sectional view of the lithium secondary battery according to exemplary embodiments.

### [DETAILED DESCRIPTION OF THE INVENTION]

Hereinafter, exemplary embodiments of the present disclosure will be described in detail with reference to the accompanying drawings so that those skilled in the art may easily practice the present disclosure.

### <Electrolyte for Lithium Secondary Battery>

An electrolyte for a lithium secondary battery according to the embodiments of the present disclosure includes a lithium salt and a sulfur-containing compound. The sulfur-containing compound may include a first compound having two sulfonate groups and a second compound having one sulfate group.

Here, the sulfonate group is a functional group having a structure in which a sulfonyl group (-SO₂-), in which two oxygen atoms are bonded to a sulfur atom by double bonds, is single-bonded to an additional oxygen atom, and may be included in the first compound, for example, in the form of a sulfonate ester bond (-SO₂-O-).

In addition, the sulfate group is a functional group having a structure in which two oxygen atoms are bonded to a sulfur atom by double bonds and the other two oxygen atoms are single-bonded to the sulfur atom, and may be included in the second compound, for example, in the form of a sulfate ester bond (-O-SO₂-O-).

The electrolyte may be, for example, a liquid electrolyte or a semi-solid electrolyte, and the semi-solid electrolyte may include, for example, a gelled polymer electrolyte (gel polymer electrolyte).

Both the first and second compounds may be cyclic sulfur-containing compounds, wherein the cyclic sulfur-containing compound refers to a cyclic sulfur compound containing a sulfur element within a ring, and specifically, the first and second compounds may be cyclic sulfur compounds containing both a sulfur element and an oxygen element within the ring.

The sulfur-containing compound may include, for example, a first compound including two sulfonate ester bonds (-SO₂-O-) within a hydrocarbon ring and a second compound including one sulfate ester bond (-O-SO₂-O-) within a hydrocarbon ring. For example, the first compound may be a cyclic sulfonate ester compound, and the second compound may be a cyclic sulfate ester compound. The sulfur-containing compound may be an additive.

In this specification, the additive may be included in an amount greater than 0 wt% ("wt%") and 15 wt% or less, 12 wt% or less, 10 wt% or less, 7 wt% or less, or 5 wt% or less, based on the total weight of the electrolyte.

In an embodiment, the first compound may be represented by Formula 1 below, and the second compound may be represented by Formula 2 below:

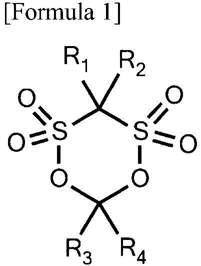

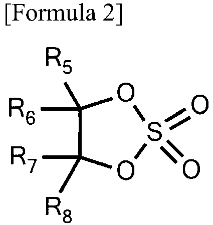

In Formula 1, R₁ to R₄ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine.

In Formula 2, R₅ to R₈ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine.

In the lithium secondary battery, lithium ions released from a cathode active material during initial charging migrate to an anode and are intercalated into an anode active material, and the anode active material and an electrolyte may react to form a film referred to as a solid electrolyte interface (SEI) on the surface of the anode.

The electrolyte for a lithium secondary battery may include the above-described first and second compounds, thereby stably forming the solid electrolyte interface (SEI), and accordingly, may effectively prevent unnecessary chemical reactions between the electrolyte and the anode, thereby further suppressing corrosion of the electrode or decomposition of the electrolyte.

In an embodiment, a combined content of the first and second compounds may be 0.02% to 15 wt%, based on the total weight of the electrolyte.

The electrolyte for a lithium secondary battery may include the first compound and the second compound together, and by controlling the combined content thereof within the above-described range, lithium ion conductivity within the electrolyte at low and high temperatures may be improved, and the SEI may be further stabilized to improve output characteristics and low- and high-temperature stability.

In an embodiment, in Formula 1, R₁ to R₄ may each independently be H, a C₁-C₂ alkyl group, a C₁-C₂ alkyl group substituted with fluorine, a C₅-C₆ cycloalkyl group, a C₅-C₆ cycloalkyl group substituted with fluorine, a C₁-C₂ alkoxy group, or a C₁-C₂ alkoxy group substituted with fluorine.

In an embodiment, in Formula 2, R₅ to R₈ may each independently be H, a C₁-C₂ alkyl group, a C₁-C₂ alkyl group substituted with fluorine, a C₅-C₆ cycloalkyl group, a C₅-C₆ cycloalkyl group substituted with fluorine, a C₁-C₂ alkoxy group, or a C₁-C₂ alkoxy group substituted with fluorine.

In an embodiment, in Formula 1, R₁ to R₄ may each independently be H or a methyl group.

In an embodiment, in Formula 2, R₅ to R₈ may each independently be H or a methyl group.

In an embodiment, the first compound may include methylene methanedisulfonate (MMDS), and the second compound may include 1,2-ethylene sulfate (ESA).

In an embodiment, the first compound may be methylene methanedisulfonate (MMDS) and the second compound may be 1,2-ethylene sulfate (ESA).

In an embodiment, The total content obtained by summing the contents of the first compound and the second compound, i.e. a combined content of the first compound and the second compound may be 0.02 wt% to 10 wt%, for example, 0.02 wt% to 5 wt%, 0.02 wt% to 2.5 wt%, or 0.02 wt% to 1.0 wt%. Accordingly, the electrolyte for a lithium secondary battery may have further improved output characteristics and stability.

In an embodiment, a weight ratio of the second compound to the first compound may be 0.05 to 20. Accordingly, damage to the SEI at high temperatures may be further suppressed, and the migration of lithium ions within the electrolyte, the SEI, and on the electrode surface may be further promoted.

In an embodiment, the weight ratio of the second compound to the first compound may be 1 to 10, for example, 1 to 5, 1 to 3, 1 to 2, or 1.

In an embodiment, a content of the first compound and a content of the second compound may each independently be 0.005 wt% to 10 wt%, based on the total weight of the electrolyte.

In an embodiment, the content of the first compound and the content of the second compound may each be 0.01 wt% to 5 wt%, and, for example, may each independently be 0.01 wt% to 2.5 wt% or 0.01 wt% to 0.5 wt%, based on the total weight of the electrolyte. Accordingly, the SEI may be further stabilized to improve capacity characteristics and cycle life characteristics.

In an embodiment, the electrolyte for a lithium secondary battery may not include 1,3-propane sultone (PRS), 1,3-propene sultone (PS), and ethylene sulfite (ES) as the sulfur-containing compounds. Accordingly, decomposition of the SEI during charge and discharge cycles, unnecessary chemical reactions within the electrolyte, and gas generation within the electrolyte at high temperatures may be prevented, thereby improving output characteristics and low- and high-temperature stability.

In an embodiment, the lithium salt may be represented as Li⁺X⁻. The anion (X⁻) of the lithium salt may be selected from, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻,SCN⁻, (CF₃CF₂SO₂)₂N⁻, and the like.

The lithium salt may be, for example, LiPF₆, LiBF₄, LiSbF₆, LiAsF₆, LiClO₄, LiN(C₂F₅SO₂)₂, LiN(CF₃SO₂)₂, CF₃SO₃Li, and/or LiC(CF₃SO₂)₃.

The lithium salt may include, for example, at least one of LiPF₆ and LiBF₄.

The lithium salt may be included, for example, at a concentration of 0.01M to 6M, 0.01M to 3M, or 0.01M to 2M in the organic solvent described below.

In an embodiment, the electrolyte for a lithium secondary battery may further include an organic solvent.

In an embodiment, the organic solvent may include at least one of a linear carbonate compound and a cyclic carbonate compound.

The linear carbonate compound may include, for example, at least one of dimethyl carbonate, ethyl methyl carbonate (EMC), diethyl carbonate, methylpropyl carbonate, ethylpropyl carbonate, and dipropyl carbonate.

The cyclic carbonate compound may include, for example, at least one of ethylene carbonate (EC), propylene carbonate, and butylene carbonate.

In an embodiment, the organic solvent may include at least one of ethyl methyl carbonate (EMC) and ethylene carbonate (EC).

The organic solvent may, for example, include a greater amount of the linear carbonate solvent than the cyclic carbonate solvent based on volume.

A volume mixing ratio of the linear carbonate solvent to the cyclic carbonate solvent may, for example, be 1:1 to 9:1, and preferably 1.5:1 to 4:1.

In an embodiment, the organic solvent may further include an ester solvent, an ether solvent, a ketone solvent, an alcohol solvent, and/or an aprotic solvent.

In an embodiment, a total content of the organic solvent may be 50 wt% or more, 60 wt% or more, or 70 wt% or more, based on the total weight of the electrolyte. The total content of the organic solvent may be controlled, for example, based on the concentration of the lithium salt.

For example, when the organic solvent includes two or more organic solvents, a content of each organic solvent may independently be greater than 15 wt%; or 20 wt% or more, based on the total weight of the electrolyte.

In an embodiment, a content of each of the linear carbonate compound and the cyclic carbonate compound may independently be greater than 15 wt%; or 20 wt% or more, based on the total weight of the electrolyte.

In an embodiment, the electrolyte for a lithium secondary battery may include an auxiliary additive, and the auxiliary additive may include at least one of fluoroethylene carbonate (FEC) and vinylene carbonate (VC).

The content of the auxiliary additive may be greater than 0 wt% and 15 wt% or less, 12 wt% or less, 10 wt% or less, 7 wt% or less, or 5 wt% or less, based on the total weight of the electrolyte.

In an embodiment, the content of the fluoroethylene carbonate (FEC) or the vinylene carbonate (VC) may be 15 wt% or less, or 10 wt% or less, based on the total weight of the electrolyte.

The content of the auxiliary additive may be, for example, 15 wt% or less, 10 wt% or less, 0.005 wt% to 10 wt%, 1 wt% to 7 wt%, 1 wt% to 5 wt%, 1 wt% to 4 wt%, or 2 wt% to 4 wt%, based on the total weight of the electrolyte.

### <Lithium Secondary Battery>

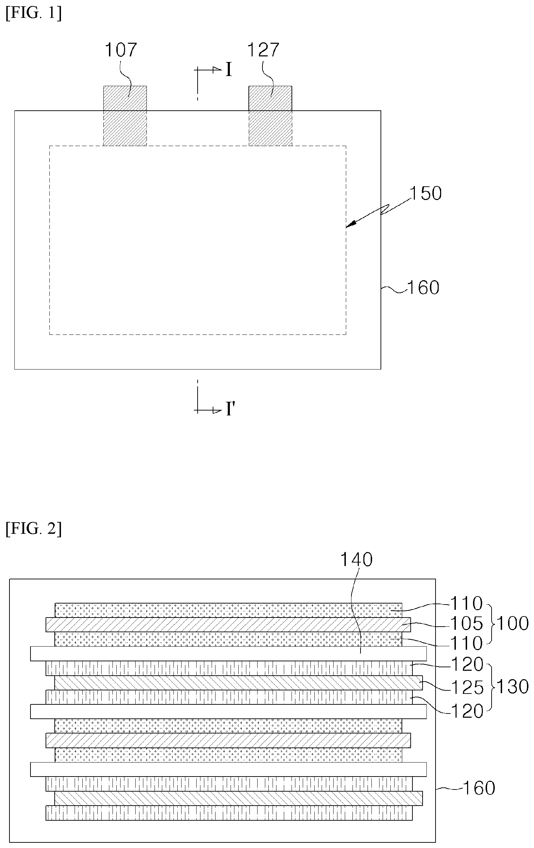

FIG. 1 is a schematic plan view of a lithium secondary battery according to exemplary embodiments, and FIG. 2 is a schematic cross-sectional view of the lithium secondary battery according to exemplary embodiments. FIG. 2 is a cross-sectional view taken along line I-I' of FIG. 1 in a thickness direction.

According to embodiments of the present disclosure, there is provided a lithium secondary battery including a cathode 100; an anode 130 disposed opposite the cathode 100; and the above-described electrolyte for a lithium secondary battery.

Accordingly, the lithium secondary battery may achieve improved output characteristics, and low- and high-temperature stability.

In an embodiment, the lithium secondary battery may include an electrode assembly including the cathode 100, the anode 130, and a separator 140 interposed between the cathode 100 and the anode 130, and at least a portion of the electrolyte may be impregnated into the electrode assembly.

In an embodiment, the electrolyte may be a liquid electrolyte, a semi-solid electrolyte, or a solid electrolyte. For example, the semi-solid electrolyte may include a gelled polymer electrolyte, and the solid electrolyte may include an inorganic solid electrolyte or a polymer solid electrolyte.

In an embodiment, the semi-solid electrolyte may be impregnated into the separator 140 to form a structure in contact with the cathode 100 and the anode 130.

In an embodiment, the semi-solid electrolyte may be impregnated into the cathode 100, the anode 130, and the separator 140 to form a structure integrated therewith.

In an embodiment, the cathode 100 may include a cathode current collector 105 and a cathode active material layer 110 disposed on at least one surface of the cathode current collector 105 and including a cathode active material. The cathode 100 may include, for example, a structure in which the cathode active material layer 110 is laminated on the cathode current collector 105.

The cathode active material may include a lithium iron phosphate compound. Accordingly, the ionic conductivity in the electrolyte at low temperatures may be sufficiently improved, and the stability of the SEI at high temperatures may be further enhanced.

In an embodiment, the lithium iron phosphate compound may include LiFePO₄, and the LiFePO₄ may be doped with at least one metal selected from the group consisting of Mg, Ca, Sr, Y, Zr, Ba, Ni, Co, Ti, V, and Mn.

The lithium iron phosphate compound may include a compound represented by Formula 3 below.

[Formula 3] LiₓFe_{y}M1ₐM2_{b}P_{z}O₄

In Formula 3, M1 and M2 may each independently include at least one element selected from the group consisting of Mg, Ca, Sr, Y, Zr, Ba, Ni, Co, Ti, V, and Mn.

In Formula 3, x, y, z, a, and b may each satisfy 1.02≤x≤1.56, 0.99≤y≤1.01, 0.96≤z≤1.04, 0<a≤0.9, and 0≤b<0.9, and 0<a+b≤0.9.

The chemical structure represented by Formula 3 indicates a bonding relationship among elements included in an olivine structure or a crystal structure of the compound, which is the cathode active material. For example, M1 and M2 may be provided as main active elements of the cathode active material. Here, it should be understood that Formula 3 is provided to express the bonding relationship between the main active elements, and is a formula encompassing the introduction and substitution of additional elements.

The cathode active material may further include auxiliary elements which are added to the main active elements. The auxiliary element may be incorporated into the crystal structure to form bonds therewith, and it should be understood that such a case is also included within the scope of the chemical structure represented by Formula 3. The auxiliary elements may include, for example, at least one element selected from the group consisting of Na, Hf, Ta, Cr, Cu, Ag, Ga, C, Si, Ra, P, and S.

The lithium iron phosphate compound may have a median particle diameter of, for example, 50 nm to 35 µm.

The cathode active material may be prepared by a method including, for example, preparing a precursor by a wet method or a solid-state method and calcining the precursor.

For example, the precursor may be prepared by mixing a lithium compound and a phosphate compound, further mixing a metal salt containing iron or a doping metal to obtain a mixed solution, and heat-treating the mixed solution. As a non-limiting example, the heat treatment may be performed under conditions of 30 °C to 80 °C and for 20 hours to 70 hours.

For example, the precursor may be prepared by pulverizing and drying a mixture of a lithium compound, an iron compound, and/or a doping metal compound, and then heat-treating the mixture. As a non-limiting example, the heat treatment may be performed under conditions of 200 °C to 400 °C and for 20 hours to 70 hours.

The compound of Formula 1 may be prepared by adjusting the concentration ratio or content of metals mixed during preparation of the precursor.

As a non-limiting example, the calcination may be performed at a temperature of 350 °C to 850 °C.

The cathode active material may include a core including the lithium iron phosphate compound and a coating formed on the core, and the coating may be, for example, a carbon coating. The carbon coating may have a thickness of, for example, 1 nm to 50 nm or 3 nm to 7 nm.

The carbon coating may be formed, for example, by mixing and stirring a coating solution containing the precursor and the carbon-based material, followed by heat treatment or drying.

As a non-limiting example, the cathode current collector 105 may include a metal foil or a metal plate. The metal foil or the metal plate may include, for example, stainless steel, iron, aluminum, copper, germanium, nickel, titanium, magnesium, or an alloy of two or more thereof.

In an embodiment, the cathode current collector 105 may have a thickness of, for example, 10 µm to 60 µm.

In an embodiment, the cathode active material layer 110 may have a thickness of, for example, 20 µm to 80 µm.

In an embodiment, the compaction density of the cathode 100 may be, for example, 2.0 g/cm³ to 5 g/cm³.

As a non-limiting example, the cathode active material layer 110 may be formed by applying a cathode slurry including the cathode active material onto at least one surface of the cathode current collector 105, and then drying and roll-pressing.

The cathode slurry may be prepared by mixing the cathode active material, a binder, a conductive material, a dispersant, a thickener, and/or a solvent, and the mixing may be performed by a kneading process.

The cathode active material layer 110 may further include the cathode active material, the binder, the conductive material, the dispersant, and/or the thickener.

As a non-limiting example, the binder may include polyvinylidene fluoride (PVdF), a copolymer of polyhexafluoropropylene and polyvinylidene fluoride (PVdF/HFP), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, or acrylonitrile-butadiene rubber. The binder may be used with a thickener such as carboxymethyl cellulose (CMC).

As a non-limiting example, the conductive material may include carbon-based conductive materials such as graphite, carbon black, graphene, or carbon nanotubes; and/or metal-based conductive materials such as tin, tin oxide, and titanium oxide; as well as perovskite materials such as LaSrCoO₃, and LaSrMnO₃, etc.

The solvent may include, for example, N-methyl-2-pyrrolidone (NMP), dimethylformamide, dimethylacetamide, N,N-dimethylaminopropylamine, ethylene oxide, tetrahydrofuran, or the like.

The cathode slurry may include the cathode active material in an amount of 80% to 98 wt% based on the solid content.

The cathode slurry may include the binder in an amount of, for example, 1% to 10 wt%, or 1% to 5 wt% based on the solid content.

The cathode slurry may include the conductive material in an amount of, for example, 1% to 10 wt%, or 1% to 6 wt% based on the solid content.

The solid content of the cathode slurry may be, for example, 50% to 90 wt%, or 60% to 80 wt%.

In an embodiment, the anode 130 may include an anode current collector 125 and an anode active material layer 120 disposed on at least one surface of the anode current collector 125 and including an anode active material. The anode 130 may include, for example, a structure in which the anode active material layer 120 is laminated on the anode current collector 125.

The anode current collector 125 may include, for example, a copper foil, nickel foil, stainless steel foil, titanium foil, nickel foam, copper foam, or a polymer substrate coated with a conductive metal. The anode current collector 125 may have a thickness of, for example, 10 µm to 50 µm.

The anode active material may include at least one selected from the group consisting of a carbon-based active material, a silicon-based active material, and silicon carbide (SiC).

The carbon-based active material may include, for example, crystalline carbon, amorphous carbon, carbon composites, or carbon fibers. The amorphous carbon may include hard carbon, soft carbon, coke, mesocarbon microbead (MCMB), or mesophase pitch-based carbon fiber (MPCF).

The crystalline carbon may include natural graphite, artificial graphite, graphitized coke, graphitized MCMB, or graphitized MPCF.

In an embodiment, the carbon-based active material may include, for example, artificial graphite and/or natural graphite.

The silicon-based active material may include, for example, Si, SiOx (0<x<2), or metal-doped SiOx (0<x<2).

The anode active material may further include, for example, a lithium metal, a lithium alloy, or a tin (Sn)-containing material. The metal may include lithium and/or magnesium, and the metal-doped SiOx (0<x<2) may include a metal silicate.

As a non-limiting example, the anode active material layer 120 may be formed by applying an anode slurry including the anode active material onto at least one surface of the anode current collector 125, and then drying and roll-pressing.

The anode slurry may be prepared by mixing the anode active material, a binder, a conductive material, a dispersant, a thickener, and/or a solvent, and the mixing may be performed by a kneading process.

The anode active material layer 120 may further include the anode active material, the binder, the conductive material, the dispersant, and/or the thickener.

As a non-limiting example, the anode binder may include a polymer material such as styrene-butadiene rubber (SBR), and may be used together with a thickener such as carboxymethyl cellulose (CMC). As a non-limiting example, the solvent may be an aqueous solvent such as water, an aqueous hydrochloric acid solution, or an aqueous sodium hydroxide solution. Other components in the anode slurry may refer to the description above regarding the cathode slurry.

The separator 140 may be interposed between the cathode 100 and the anode 130. The separator 140 may be configured to prevent an electrical short-circuit between the cathode 100 and the anode 130 and to allow the flow of ions. For example, the separator 140 may have a thickness of 10 µm to 20 µm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, or an ethylene/methacrylate copolymer. These may be used alone or in combination of two or more thereof.

The porous nonwoven fabric may include glass fibers having a high melting point, polyethylene terephthalate fibers or the like.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte for a lithium secondary battery according to exemplary embodiments of the present disclosure to define a lithium secondary battery.

In an embodiment, a solid electrolyte may be used in place of the non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

As illustrated in FIGS. 1 and 2, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 and connected to electrode leads (a cathode lead 107 and an anode lead 127) that extend or are exposed to the outside of the case 160.

The lithium secondary battery may be manufactured, for example, in a cylindrical, prismatic, pouch, or coin type using a can.

The invention is also defined by the following aspects:
Aspect 1. An electrolyte for a lithium secondary battery comprising:
   a lithium salt; and
   a sulfur-containing compound,
   wherein the sulfur-containing compound comprises a first compound represented by Formula 1 below and a second compound represented by Formula 2 below, and
   the combined content of the first and second compounds is 0.02% by weight to 15% by weight, based on the total weight of the electrolyte: 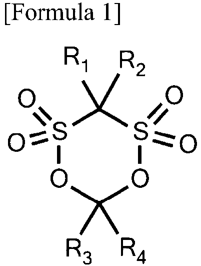 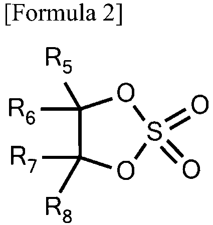
   wherein in Formula 1, R₁ to R₄ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine, and
   in Formula 2, R₅ to R₈ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine.
Aspect 2. The electrolyte for a lithium secondary battery according to aspect 1, wherein a combined content of the first and second compounds is 0.02% by weight to 10% by weight, based on the total weight of the electrolyte.
Aspect 3. The electrolyte for a lithium secondary battery according to aspects 1 or 2, wherein a weight ratio of the second compound to the first compound is 0.05 to 20.
Aspect 4. The electrolyte for a lithium secondary battery according to aspect 3, wherein the weight ratio of the second compound to the first compound is 1 to 10.
Aspect 5. The electrolyte for a lithium secondary battery according to any one of aspects 1 to 4, wherein a content of the first compound and a content of the second compound are each independently 0.005% by weight to 10% by weight, based on the total weight of the electrolyte.
Aspect 6. The electrolyte for a lithium secondary battery according to aspect 5, wherein the content of the first compound and the content of the second compound are each independently 0.01% by weight to 5% by weight, based on the total weight of the electrolyte.
Aspect 7. The electrolyte for a lithium secondary battery according to any one of aspects 1 to 6, wherein the electrolyte does not include 1,3-propanesultone (PRS), 1,3-propenesultone (PS), and ethylene sulfite (ES) as the sulfur-containing compound.
Aspect 8. The electrolyte for a lithium secondary battery according to any one of aspects 1 to 7, further comprising an organic solvent,
   wherein the organic solvent comprises at least one of a linear carbonate compound and a cyclic carbonate compound.
Aspect 9. The electrolyte for a lithium secondary battery according to aspect 8, wherein the organic solvent comprises at least one of ethyl methyl carbonate (EMC) and ethylene carbonate (EC).
Aspect 10. The electrolyte for a lithium secondary battery according to any one of aspects 1 to 9, further comprising an auxiliary additive comprising at least one of fluoroethylene carbonate (FEC) and vinylene carbonate (VC).
Aspect 11. A lithium secondary battery comprising:
   a cathode;
   an anode disposed opposite the cathode; and
   the electrolyte for a lithium secondary battery of any one of aspects 1 to 10.
Aspect 12. The lithium secondary battery according to aspect 11, comprising an electrode assembly comprising the cathode, the anode, and a separator interposed between the cathode and the anode,
   wherein at least a portion of the electrolyte is impregnated into the electrode assembly. Aspect 13. The lithium secondary battery according to aspect 12, wherein the cathode comprises a cathode current collector and a cathode active material layer disposed on at least one surface of the cathode current collector and comprising a cathode active material,
   wherein the cathode active material comprises a lithium iron phosphate compound. Aspect 14. The lithium secondary battery according to aspect 13, wherein the lithium iron phosphate compound comprises LiFePO₄, and
   the LiFePO₄ is doped with at least one metal selected from the group consisting of Mg, Ca, Sr, Y, Zr, Ba, Ni, Co, Ti, V, and Mn.
Aspect 15. The lithium secondary battery according to any one of aspects 12 to 14, wherein the anode comprises an anode current collector and an anode active material layer disposed on at least one surface of the anode current collector and comprising an anode active material,
   wherein the anode active material comprises at least one selected from the group consisting of a carbon-based active material, a silicon-based active material, and silicon carbide (SiC).

Hereinafter, embodiments of the present disclosure will be described in more detail with reference to specific experimental examples. The examples and comparative examples included in the experimental examples are merely illustrative of the present disclosure and do not limit the technical spirit of the present disclosure or the scope of the appended claims.

### Examples 1 to 9 and Comparative Examples 1 to 13

### (1) Preparation of Electrolyte

A 1.2M LiPF₆ solution was prepared by dissolving LiPF₆ in a mixed solvent in which ethylene carbonate (EC) and ethyl methyl carbonate (EMC) were mixed in a volume mixing ratio of 25:75.

Electrolytes were prepared by additionally mixing additives as shown in Table 1 below into the 1.2M LiPF₆ solution. In Table 1, the wt% of each component is a value based on the total weight of the electrolyte.

**[TABLE 1]**

| | Sulfur-containing compound (wt%) | | | | | Auxiliary additive (wt%) | |
|---|---|---|---|---|---|---|---|
| | MMDS | ESA | PRS | ES | PS | FEC | VC |
| Example 1 | 0.5 | 0.5 | - | - | - | 1.5 | 2.5 |
| Example 2 | 0.01 | 0.01 | - | - | - | 1.5 | 2.5 |
| Example 3 | 0.5 | 5 | - | - | - | 1.5 | 2.5 |
| Example 4 | 0.5 | 10 | - | - | - | 1.5 | 2.5 |
| Example 5 | 5 | 0.5 | - | - | - | 1.5 | 2.5 |
| Example 6 | 10 | 0.5 | - | - | - | 1.5 | 2.5 |
| Example 7 | 0.5 | 0.5 | - | - | - | - | 2.5 |
| Example 8 | 0.5 | 0.5 | - | - | - | 1.5 | - |
| Example 9 | 0.5 | 0.5 | - | - | - | 2.5 | 1.5 |
| Comparative Example 1 | 0.5 | - | - | - | - | 1.5 | 2.5 |
| Comparative Example 2 | 0.5 | - | - | - | 0.5 | 1.5 | 2.5 |
| Comparative Example 3 | - | 0.5 | - | - | - | 1.5 | 2.5 |
| Comparative Example 4 | 0.5 | - | 0.5 | - | - | 1.5 | 2.5 |
| Comparative Example 5 | 0.5 | - | - | 0.5 | - | 1.5 | 2.5 |
| Comparative Example 6 | - | 0.5 | - | - | 0.5 | 1.5 | 2.5 |
| Comparative Example 7 | - | 0.5 | 0.5 | - | - | 1.5 | 2.5 |
| Comparative Example 8 | - | 0.5 | - | 0.5 | - | 1.5 | 2.5 |
| Comparative Example 9 | 0.005 | 0.005 | - | - | - | 1.5 | 2.5 |
| Comparative Example 10 | 10 | 10 | - | - | - | 1.5 | 2.5 |
| Comparative Example 11 | 15 | 15 | - | - | - | 1.5 | 2.5 |
| Comparative Example 12 | 0.5 | 15 | - | - | - | 1.5 | 2.5 |
| Comparative Example 13 | 15 | 0.5 | - | - | - | 1.5 | 2.5 |

The components listed in Table 1 above are as follows.
MMDS: Methylene methanedisulfonate (1,5,2,4-dioxadithiane 2,2,4,4-tetraoxide)
ESA: 1,2-ethylene sulfate (1,3,2-dioxathiolane 2,2-dioxide)
PRS: 1,3-propanesultone (3-hydroxypropanesulfonic acid γ-sultone)
ES: Ethylene sulfite (1,3,2-dioxathiolan-2-oxide)
PS: 1,3-propene sultone (1-propene 1,3-sultone)
FEC: Fluoroethylene carbonate (4-fluoro-1,3-dioxolan-2-one)
VC: Vinylene carbonate (1,3-dioxol-2-one)

### (2) Manufacture of Lithium Secondary Battery

Lithium carbonate as a lithium source, iron phosphate, and glucose as a carbon coating source were added to distilled water, and particles were mixed and pulverized using a ball mill to form a mixed solution containing raw materials for LiFePO₄. The mixed solution containing the raw materials for LiFePO₄ was dried using a spray dryer equipped with a micro-nozzle. The dried powder was calcined at about 300°C to 1000°C for about 3 to 10 hours in a nitrogen atmosphere, followed by classification and de-ironing processes to prepare a lithium iron phosphate compound as cathode active material particles.

The cathode active material, carbon black as a conductive material, and PVDF as a binder were mixed in a weight ratio of 97:1:2 and then dispersed in N-methyl-2-pyrrolidone to prepare a cathode slurry. The cathode slurry was applied onto an aluminum foil having a thickness of 12 µm, on an area excluding a protrusion (cathode tab), and then dried and roll-pressed to fabricate a cathode.

Graphite as an anode active material, carbon black as a conductive material, styrene-butadiene rubber as a binder, and carboxymethylcellulose as a thickener were mixed in a weight ratio of 95:3:1:1 and then dispersed in water to prepare an anode slurry. The anode slurry was applied onto a copper foil having a thickness of 8 µm, on an area excluding a protrusion (anode tab), and then dried and roll-pressed to fabricate an anode.

The cathode and the anode were each notched to a predetermined size and laminated, and a separator (polyethylene film) having a thickness of 13 µm was interposed between the cathode and the anode to form an electrode assembly. The cathode leads and the anode leads were then welded to the cathode tabs and the anode tabs. The electrode assembly was placed in a pouch such that a portion of the cathode leads and the anode leads was exposed externally, and three sides other than an electrolyte injection side were sealed. At this time, the portion having the electrode tabs was included in the sealed area. The electrolyte prepared in Example 1 was injected through the electrolyte injection side, and the electrolyte injection side was then sealed. After impregnation for 12 hours or more, a lithium secondary battery was manufactured.

In Examples 2 to 9 and Comparative Examples 1 to 13, lithium secondary batteries were manufactured in the same manner as in Example 1, except that each electrolyte prepared according to Table 1 was injected.

### Experimental Example

The lithium secondary batteries manufactured according to the above-described examples and comparative examples were subjected to performance evaluation using a charge/discharge tester (Toyo-System Co., LTD, TOSCAT-3600) as follows.

### Experimental Example 1: Initial Performance

### (1) Initial Discharge Capacity

The lithium secondary batteries were subjected to 3 cycles of 0.5C-rate CC/CV charging (3.65 V, 0.05C cut-off) at 25 °C and 0.5C-rate CC discharging (2.5 V cut-off). The discharge capacity value at the third cycle was evaluated as the initial discharge capacity of the battery.

The results are shown in Table 2.

### (2) Initial Internal Resistance (DCIR)

At a SOC of 60%, the lithium secondary batteries were discharged and charged for 10 seconds, respectively, while varying the C-rate to 0.2C, 0.5C, 1.0C, 1.5C, 2.0C, and 2.5C at 25 °C. Voltage and current changes were measured before and after discharging and charging. The voltage change amount was plotted against the current change amount, and the slope obtained by fitting a straight line through linear regression analysis was evaluated as the initial DCIR.

The results are shown in Table 2.

### Experimental Example 2: High-Temperature Stability

### (1) Increase Rate of Internal Resistance (DCIR) After 8 Weeks at 60 °C

The lithium secondary batteries were subjected to 0.5C CC/CV charging (3.65 V, 0.05C cut-off) at 25 °C and 0.5C CC discharging to a SOC of 60%. At the SOC of 60%, discharge and charge were performed for 10 seconds, respectively, while varying the C-rate to 0.2C, 0.5C, 1.0C, 1.5C, 2.0C, and 2.5C. Changes in voltage and current were measured before and after discharging and charging. The voltage change was plotted against the change in current, and the slope (DCIR) R1 was obtained by fitting a straight line through linear regression analysis.

The charged lithium secondary batteries of the examples and comparative examples were left at 60 °C for 8 weeks under conditions of exposure to the atmosphere, followed by additionally leaving them at room temperature for 30 minutes, and the slope (DCIR) R2 was obtained in the same manner as described above.

The high-temperature internal resistance increase rate was calculated by substituting R1 and R2 into Equation 1 below. [Equation 1] $High - temperature DCIR increase rate \left(%\right) = \left\{\left(R2-R1\right)/R1\right\} \times 100$

The results are shown in Table 2.

### (2) Storage Capacity Retention After 8 Weeks at 60 °C (hereinafter also referred to as high-temperature storage retention)

The lithium secondary batteries were subjected to 3 cycles of 0.5C CC/CV charging (3.65 V, 0.05C cut-off) and 0.5C CC discharging (2.5 V cut-off) at 25 °C, and the discharge capacity C1 was measured at the third cycle. The charged lithium secondary batteries of the examples and comparative examples were left at 60 °C for 8 weeks, followed by additionally leaving them at room temperature for 30 minutes, and 0.5C CC discharging (2.5 V cut-off) was performed to measure the discharge capacity C2.

The high-temperature storage retention was calculated by substituting C1 and C2 into Equation 2 below. [Equation 2] $High - temperature storage retention \left(%\right) = \left(C2/C1\right) \times 100$

The results are shown in Table 2.

### (3) High-Temperature Cycle Capacity Retention (hereinafter also referred to as high-temperature cycle life retention)

The lithium secondary batteries were subjected to 500 cycles of 1.0C CC/CV charging (3.65 V, 0.05C cut-off) and 1.0C CC discharging (2.5 V cut-off) at 45 °C. The discharge capacity at the first and 500th cycles was measured, respectively, and the high-temperature cycle life retention was determined by dividing the discharge capacity at the 500th cycle by the discharge capacity at the first cycle.

The results are shown in Table 2.

### Experimental Example 3: Low-Temperature Stability

### (1) Internal Resistance (DCIR) After 4 Hours at -10 °C

The lithium secondary batteries were left in a chamber at -10 °C for 4 hours, and then the batteries were discharged and charged for 10 seconds, respectively, while varying the C-rate to 0.2C, 0.5C, 1.0C, 1.5C, 2.0C, and 2.5C at a SOC of 60%. Changes in voltage and current were measured before and after discharging and charging. The voltage change was plotted against the change in current, and the slope obtained by fitting a straight line through linear regression analysis was evaluated as the low-temperature DCIR.

The results are shown in Table 2.

### (2) Storage Capacity Retention After 4 Hours at -10 °C (hereinafter also referred to as low-temperature storage retention)

The lithium secondary batteries were subjected to 3 cycles of 0.5C CC/CV charging (3.65 V, 0.05C cut-off) and 0.5C CC discharging (2.5 V cut-off) at 25 °C, and the discharge capacity C3 at the third cycle was measured.

The charged lithium secondary batteries were left at -10 °C for 4 hours, followed by additionally leaving them at room temperature for 30 minutes, and 0.5C CC discharging (2.75 V cut-off) was performed to measure the discharge capacity C4.

The low-temperature storage retention was calculated by substituting C3 and C4 into Equation 3 below. [Equation 3] $Low - temperature storage retention \left(%\right) = \left(C4/C3\right) \times 100$

The results are shown in Table 2 below.

**[TABLE 2]**

| | **Initial performance** | | **High-temperature stability** | | | **Low-temperature stability** | |
|---|---|---|---|---|---|---|---|
| | Discharge capacity (mAh) | D_DCIR (mΩ) | D_DCIR increase rate (%) | Storage retention (%) | Cycle life retention (%) | D_DCIR (mΩ) | Storage retention (%) |
| Example 1 | 1077 | 46 | 137 | 86.5 | 89.7 | 165.9 | 41.6 |
| Example 2 | 1070 | 47.5 | 141 | 85.4 | 89.6 | 169.9 | 41 |
| Example 3 | 1070 | 49.1 | 147 | 79.9 | 84.1 | 174.4 | 39 |
| Example 4 | 1058 | 52 | 148 | 73.1 | 83.9 | 175.4 | 38.8 |
| Example 5 | 1062 | 53.3 | 150 | 80.2 | 82.7 | 175 | 39 |
| Example 6 | 1061 | 54.3 | 153 | 74.4 | 83 | 177 | 38.9 |
| Example 7 | 1077 | 47.1 | 140 | 85.8 | 88.3 | 174.6 | 37.4 |
| Example 8 | 1077 | 45.1 | 152 | 76.5 | 87.7 | 160.3 | 43.1 |
| Example 9 | 1076 | 46.2 | 170 | 70.4 | 88 | 177.7 | 35.5 |
| Comparative Example 1 | 1070 | 58.5 | 142 | 84.5 | 89.2 | 186.7 | 40.7 |
| Comparative Example 2 | 1066 | 50.5 | 153 | 84.1 | 89.6 | 189.7 | 40.4 |
| Comparative Example 3 | 1066 | 50.4 | 155 | 84.3 | 87.8 | 187.7 | 40.5 |
| Comparative Example 4 | 1073 | 63.4 | 130 | 86 | 89.3 | 212.1 | 38.3 |
| Comparative Example 5 | 1061 | 54.4 | 140 | 83.2 | 88.1 | 190.5 | 40 |
| Comparative Example 6 | 1066 | 50.2 | 155 | 82 | 87.1 | 187.8 | 40.5 |
| Comparative Example 7 | 1068 | 62.5 | 135 | 84.5 | 87.5 | 208.4 | 38.1 |
| Comparative Example 8 | 1065 | 53.1 | 143 | 81.1 | 85.1 | 188.4 | 38.8 |
| Comparative Example 9 | 1060 | 60.5 | 163 | 75.5 | 80.9 | 192.4 | 32.1 |
| Comparative Example 10 | 1055 | 55.4 | 154 | 80.4 | 83.3 | 181.5 | 36.4 |
| Comparative Example 11 | 1010 | 87.4 | 200 | 30.5 | 71.5 | 240.1 | 21.7 |
| Comparative Example 12 | 1017 | 78.4 | 180 | 33.4 | 75.1 | 220.7 | 24.4 |
| Comparative Example 13 | 1010 | 79.7 | 185 | 30.9 | 73 | 231.4 | 20.2 |

From Table 2, the lithium secondary batteries prepared in Examples 1 to 9 had improved initial performance, and high- and low-temperature stability. The initial discharge capacity of the lithium secondary batteries prepared according to Examples 1 to 3, which included an electrolyte including the first compound of Formula 1 and the second compound of Formula 2 described above in a weight ratio (ESA/MMDS) of 1 to 10, was 1070 mAh or more, the initial D_DCIR was 49.1 mΩ or less, the high-temperature D_DCIR increase rate was 147% or less, the high-temperature storage retention was 79.9% or more, the high-temperature cycle life retention was 84.1% or more, the low-temperature D_DCIR was 174.4 mΩ or less, and the low-temperature storage retention was 39% or more. Accordingly, the initial performance, and the high- and low-temperature stability of the lithium secondary batteries prepared in Examples 1 to 3 were further improved.

The lithium secondary battery prepared in Comparative Example 1, which used an electrolyte including only the first compound (MMDS) as the sulfur-containing compound, had high initial D_DCIR and low-temperature D_DCIR.

The lithium secondary battery prepared in Comparative Example 3, which used an electrolyte including only the second compound (ESA) as the sulfur-containing compound, had a very high low-temperature D_DCIR of 187.7 mΩ.

The lithium secondary batteries prepared in Comparative Examples 2, 4 and 5, which used electrolytes including the first compound (MMDS) and PS, PRS, or ES as the sulfur-containing compounds, respectively, had very high low-temperature D_DCIRs of 189.7 mΩ, 212.1 mΩ, and 190.5 mΩ, respectively, and in the case of Comparative Examples 4 and 5, the initial D_DCIR was also higher than those of the examples.

The lithium secondary batteries prepared in Comparative Examples 6, 7 and 8, which used electrolytes including the second compound (ESA) and PS, PRS, or ES as the sulfur-containing compounds, respectively, had very high low-temperature D_DCIRs of 187.8 mΩ, 208.4 mΩ, and 188.4 mΩ, respectively, and in the case of Comparative Example 7, the initial D_DCIR was also higher than those of the examples.

The lithium secondary battery prepared in Comparative Example 9, which applied an electrolyte with a combined content of MMDS and ESA of 0.01 wt%, showed an increased initial D_DCIR compared to the examples, a lower high-temperature cycle life retention, a very high low-temperature D_DCIR of 192.4 mΩ, and a lower low-temperature storage retention.

The lithium secondary batteries prepared in Comparative Examples 11 to 13, which used an electrolyte in which the combined content of MMDS and ESA exceeded 15 wt%, exhibited significantly lower initial performance, and high- and low-temperature stability than those of the examples.

## Claims

1. . An electrolyte for a lithium secondary battery comprising:
a lithium salt; and
a sulfur-containing compound,
wherein the sulfur-containing compound comprises a first compound represented by Formula 1 below and a second compound represented by Formula 2 below, and
the combined content of the first and second compounds is 0.02% by weight to 15% by weight, based on the total weight of the electrolyte: 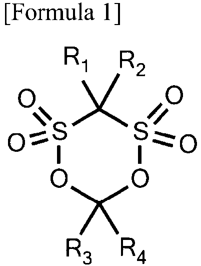 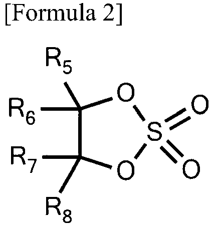
wherein in Formula 1, R₁ to R₄ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine, and
in Formula 2, R₅ to R₈ are each independently H, a C₁-C₅ alkyl group, a C₁-C₅ alkyl group substituted with fluorine, a C₄-C₆ cycloalkyl group, a C₄-C₆ cycloalkyl group substituted with fluorine, a C₁-C₅ alkoxy group, or a C₁-C₅ alkoxy group substituted with fluorine.

2. . The electrolyte for a lithium secondary battery according to claim 1, wherein a combined content of the first and second compounds is 0.02% by weight to 10% by weight, based on the total weight of the electrolyte.

3. . The electrolyte for a lithium secondary battery according to claims 1 or 2, wherein a weight ratio of the second compound to the first compound is 0.05 to 20.

4. . The electrolyte for a lithium secondary battery according to claim 3, wherein the weight ratio of the second compound to the first compound is 1 to 10.

5. . The electrolyte for a lithium secondary battery according to any one of claims 1 to 4, wherein a content of the first compound and a content of the second compound are each independently 0.005% by weight to 10% by weight, based on the total weight of the electrolyte.

6. . The electrolyte for a lithium secondary battery according to claim 5, wherein the content of the first compound and the content of the second compound are each independently 0.01% by weight to 5% by weight, based on the total weight of the electrolyte.

7. . The electrolyte for a lithium secondary battery according to any one of claims 1 to 6, wherein the electrolyte does not include 1,3-propanesultone (PRS), 1,3-propenesultone (PS), and ethylene sulfite (ES) as the sulfur-containing compound.

8. . The electrolyte for a lithium secondary battery according to any one of claims 1 to 7, further comprising an organic solvent,
wherein the organic solvent comprises at least one of a linear carbonate compound and a cyclic carbonate compound.

9. . The electrolyte for a lithium secondary battery according to claim 8, wherein the organic solvent comprises at least one of ethyl methyl carbonate (EMC) and ethylene carbonate (EC).

10. . The electrolyte for a lithium secondary battery according to any one of claims 1 to 9, further comprising an auxiliary additive comprising at least one of fluoroethylene carbonate (FEC) and vinylene carbonate (VC).

11. . A lithium secondary battery comprising:
a cathode(100);
an anode(130) disposed opposite the cathode(100); and
the electrolyte for a lithium secondary battery of any one of claims 1 to 10.

12. . The lithium secondary battery according to claim 11, comprising an electrode assembly comprising the cathode(100), the anode(130), and a separator(140) interposed between the cathode(100) and the anode(130),
wherein at least a portion of the electrolyte is impregnated into the electrode assembly.

13. . The lithium secondary battery according to claim 12, wherein the cathode(100) comprises a cathode current collector(105) and a cathode active material layer(110) disposed on at least one surface of the cathode current collector(105) and comprising a cathode active material,
wherein the cathode active material comprises a lithium iron phosphate compound.

14. . The lithium secondary battery according to claim 13, wherein the lithium iron phosphate compound comprises LiFePO₄, and
the LiFePO₄ is doped with at least one metal selected from the group consisting of Mg, Ca, Sr, Y, Zr, Ba, Ni, Co, Ti, V, and Mn.

15. . The lithium secondary battery according to any one of claims 12 to 14, wherein the anode(130) comprises an anode current collector(125) and an anode active material layer(120) disposed on at least one surface of the anode current collector(125) and comprising an anode active material,
wherein the anode active material comprises at least one selected from the group consisting of a carbon-based active material, a silicon-based active material, and silicon carbide (SiC).
